# EUROPÄISCHE PATENTANMELDUNG

(11) **EP 0 542 258 A1**
(43) Veröffentlichungstag der Anmeldung: **19.05.1993**
(21) Anmeldenummer: 92119360.3
(22) Anmeldetag: 12.11.1992
(51) Int. Cl.: B65G 47/14

(54) **Vorrichtung zum Vereinzeln stangenförmiger Gegenstände, insbesondere von Bremsleitungen**

(30) Priorität: 14.11.1991 DE 4137518; 08.04.1992 DE 4211822
(71) Anmelder: Höld, Felix, D-86874 Tussenhausen (DE); Ries, Werner, D-86872 Scherstetten (DE)
(72) Erfinder: Höld, Felix, D-86874 Tussenhausen (DE); Ries, Werner, D-86872 Scherstetten (DE)
(74) Vertreter: Fiener, Josef

(57) **Zusammenfassung**

Zur Vereinzelung von stangenförmigen Gegenständen (8) bei möglichst einfachem Aufbau und zuverlässiger Vereinzelung wird eine Vereinzelungsvorrichtung (1) vorgeschlagen, bei der an einem Förderelement (4, 14, 24, 34...) Rillen (9, 19, 29, 39) ausgebildet sind, deren Breite und Tiefe dem jeweiligen Durchmesser der zu vereinzelnden Gegenstände (8) entspricht. Außerdem wird die axiale Ausrichtung der zu vereinzelnden Gegenstände mittels konisch verlaufender Führungsleisten vorgeschlagen, sowie die gegenseitige Verstellung benachbarter Förderelemente zur Anpassung der Rillenbreite beschrieben. Die Vorrichtung eignet sich insbesondere für Bremsleitungen, Hydraulikrohre und dgl..

## Beschreibung

Die Erfindung betrifft eine Vorrichtung zum Vereinzeln von stangenförmigen Gegenständen, insbesondere von Bremsleitungen, gemäß den oberbegrifflichen Merkmalen des Patentanspruches 1.

Eine derartige Vereinzelungsvorrichtung ist aus der DE-A-15 31 068 bekannt. Hierbei sind mindestens zwei parallel mit gleicher Geschwindigkeit ansteigend geführte Förderketten mit Mitnehmern vorgesehen, die über gesonderte Antriebsketten angetrieben sind. Die Förderketten hängen zwischen zwei Umlenkrädern unter Bildung einer zum Beladen nach oben offenen Mulde oder einer Tasche durch, in der das zu vereinzelnde Stabmaterial aufgenommen und umgewälzt wird. Hierbei ist die Drehrichtung der antreibenden Kettenräder umkehrbar, so daß bei der einen Drehrichtung die Stäbe oder Stangen nur umgewälzt werden, während sie bei der anderen Drehrichtung mit den Mitnehmern der Förderketten über die austragsseitigen Kettenräder hinweg aus der Mulde herausgefördert werden. Wie in dieser Druckschrift dargestellt, werden jedoch durch die Mitnehmer zwei Stangen oder Stäbe aufgenommen, so daß ein gezielter Einzelaustrag der Stäbe oder Stangen nicht möglich ist. Zudem ist der Aufbau dieser Vorrichtung mit einer Vielzahl von Kettentrieben, nämlich wenigstens zwei Förderketten und drei Antriebsketten sehr kompliziert und aufwendig.

Entsprechendes gilt für die aus der DE-A-29 05 492 bekannten Vorrichtung zum Vereinzeln von langgestreckten Gegenständen, insbesondere Brettern, wobei an den Ketten aufwendig geformte Mitnehmerprofile vorgesehen sind. Zudem verengen sich beim Durchlauf durch die Mulde die dort vorhandenen Spalte zwischen den Mitnehmerprofilen, so daß dünne Stangen, Drähte, Rohre, insbesondere Hydraulikrohre und Bremsleitungen dort eingeklemmt werden könnten bzw. nicht zuverlässig mitgenommen würden.

Desweiteren ist aus der DE-C-22 34 441 eine Vorrichtung zum Vereinzeln und Quertransport von Stab- oder Rohrmaterial bekannt, mit der der Vereinzelungsvorgang aus den muldenförmigen Taschen der Ketten unter Entwirrung der langen und dünnen Stäbe bzw. Rohre erfolgen soll. Hierzu wird vorgeschlagen, daß die Kettenräder der Förderkette mit unterschiedlichen Drehzahlen umlaufen, so daß die die Taschen bildenden durchhängenden Kettentrume bis in eine gerade Strecklage gestreckt werden, wobei das Stab- bzw. Rohrmaterial angehoben wird. Auch hier ist eine Vielzahl von unterschiedlichen Antriebsketten erforderlich, wobei aufgrund der unterschiedlichen Drehzahlen zudem noch Übersetzungsgetriebe erforderlich sind. Außerdem ist der Leistungsbedarf dieser Vereinzelungsvorrichtung aufgrund des Hochhebens des gesamten Bündels des Stab- bzw. Rohrmaterials relativ hoch. Zudem läßt sich hierdurch keine taktweise Vereinzelung durchführen, wie dies für weiterbearbeitende Maschinen wie Pressen oder Montageautomaten vorteilhaft wäre. Aus der DE-C-22 29 186 und der DE-C-25 22 970 sind weiterhin Vereinzelungsvorrichtungen für Stangen, insbesondere Drähte bekannt, die zusätzliche und damit aufwendige Magnet- oder Vibrationsvorrichtungen benötigen.

Demzufolge liegt der Erfindung die Aufgabe zugrunde, eine besonders einfache Vorrichtung zum zuverlässigen Vereinzeln von stangenförmigen Gegenständen, insbesondere von Stab- bzw. Rohrmaterial wie Bremsleitungen zu schaffen.

Diese Aufgabe wird gelöst durch eine Vereinzelungsvorrichtung mit den Merkmalen des Patentanspruches 1.

Durch die Ausbildung von Rillen an dem wenigstens einen Förderelement, deren Breite und Tiefe dem jeweiligen Durchmesser der zu vereinzelnden Gegenstände entspricht, ist sichergestellt, daß jeweils nur ein einzelner Gegenstand von dem Bündel der stangenförmigen Gegenstände aufgenommen und weitergefördert wird. Hierbei ist von Vorteil, daß durch den gleichmäßigen Abstand der Rillen eine bestimmte Taktzeit für weiterverarbeitende Maschinen eingehalten werden kann. Durch die Zwangsführung des Förderelementes in der Mulde wird erreicht, daß auch bei im Laufe des Vereinzelungsvorganges abnehmenden Bündel sich das Förderelement nicht eigenständig anhebt und somit schädliche Vibrationen nicht entstehen können.

In vorteilhafter Weise sind die Rillen an einem Riemen zwischen jeweils zwei plateauförmigen Aufbauprofilen ausgebildet, so daß neben der schonenden Behandlung der zu vereinzelnden Gegenstände eine Verringerung der Herstellkosten erreicht werden kann, da als Förderelement Zahnriemen verwendet werden können. Außerdem bedarf ein Riemen keiner Schmierung und Wartung, so daß der Bauaufwand weiter reduziert wird. Auch ist es möglich, derartige Zahnriemen in relativ großer Breite zusammenzustellen, so daß ein einziger Riemen zur Förderung von etwa 2 m langen stab- oder stangenförmigen Gegenständen wie Bremsleitungen geeignet ist.

Von besonderer Bedeutung ist die Ausführungsform, bei der das Förderelement von einem von außen her angreifenden Antriebsrad angetrieben ist. Somit sind gegenüber dem Stand der Technik keine gesonderten Antriebsketten oder dergleichen erforderlich, sondern der Förderketten- oder -riementrieb bildet zugleich den Antrieb. Hierdurch ergibt sich eine weitere Vereinfachung bei der Herstellung der Vereinzelungsvorrichtung. Zudem ist hierdurch der Synchronlauf mehrerer nebeneinander angeordneter Förderelemente sichergestellt, wodurch sich kein Schräglauf und unterschiedliche Kettendehnungen oder dergleichen ergeben können.

Desweiteren ist von Bedeutung, daß entlang den hochfördernden Trums des Förderelementes konisch verlaufende Führungsleisten vorgesehen sind, so daß sich eine axiale Ausrichtung und damit eine Verbesserung der Vereinzelungsaufgabe ergibt. Hierdurch wird sichergestellt, daß die zu vereinzelnden Gegenstände in der exakt gleichen axialen Lage der Abgabestelle zugeführt werden. Dies ist insbesondere für die weitere Verarbeitung oder eine automatische Montage von besonderem Vorteil, insbesondere wird hierdurch bei der Hochförderung der vereinzelten Gegenstände eine axiale Ausrichtung erreicht, so daß nicht noch eine zusätzliche Arbeitsstation erforderlich ist. Bevorzugt wird dies zum exakten Positionieren von Überwurfmuttern an Bremsleitungen verwendet.

Vorteilhaft ist außerdem die Relativ-Verschiebbarkeit nebeneinander angeordneter Förderelemente, da hierdurch die wirksame Rillenbreite in Anpassung an unterschiedliche Durchmesser der zu vereinzelnden Gegenstände schnell und einfach verstellt werden kann.

Weitere vorteilhafte Ausführungen sind Gegenstand der abhängigen Ansprüche. Nachfolgend werden zwei Ausführungsbeispiele anhand der Zeichnungen näher beschrieben und erläutert. Es zeigen:
- Fig. 1: eine Seitenansicht auf eine Vereinzelungsvorrichtung mit einer seitlich herausgezogenen, vergrößerten Darstellung eines Teils eines Förderelementes;
- Fig. 2: eine Draufsicht auf die Vereinzelungsvorrichtung gemäß Fig. 1;
- Fig. 3: eine zweite Ausführungsform der Vereinzelungsvorrichtung mit mehreren Riementrieben;
- Fig. 4: eine Draufsicht auf die Vereinzelungsvorrichtung gemäß Fig. 3;
- Fig. 5: eine vergrößerte Darstellung der Zahnriemen; und
- Fig. 6: eine Seitenansicht gemäß Fig. 5 mit drei Einstellpositionen.

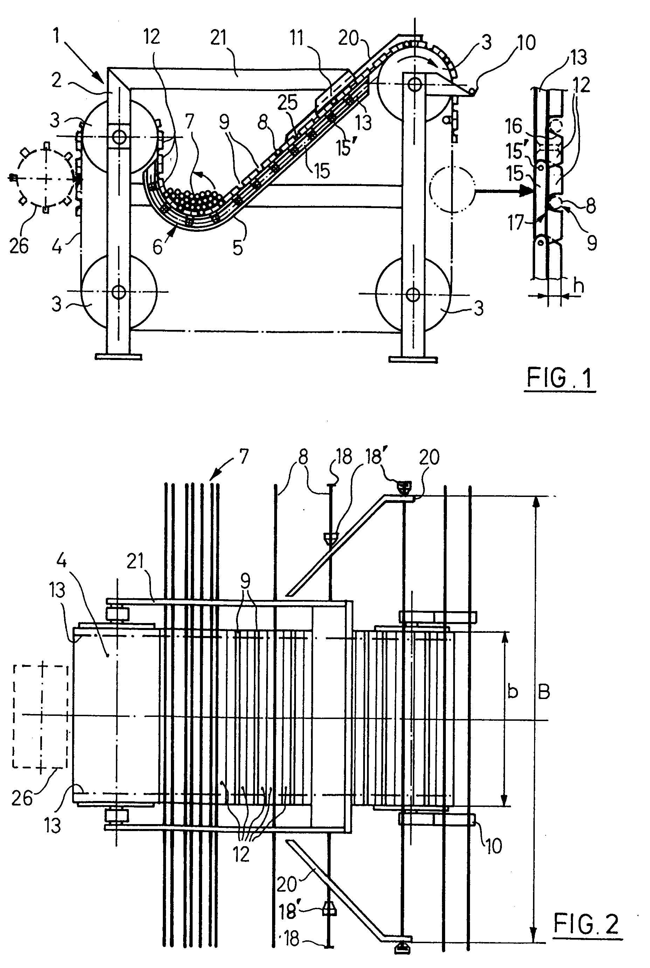

In Fig. 1 ist eine Vereinzelungsvorrichtung 1 in schematischer Seitenansicht gezeigt. Diese besteht im wesentlichen aus einem Rahmen 2, an dem hier vier Umlenkräder 3 gelagert sind, die von einem Förderelement 4 in Form eines Riemen- oder Kettentriebes umschlungen sind, wie dies nachfolgend näher beschrieben wird. Das Förderelement 4 weist zwischen den beiden oberen Umlenkrädern 3 einen Durchhang bzw. eine Mulde 6 auf, in der ein Bündel 7 von zu vereinzelnden stangenförmigen Gegenständen 8 aufgenommen ist, das während der Umlaufbewegung des Förderelementes 4 entgegen der Umlaufrichtung des Förderelementes 4 und entgegen dem Uhrzeigersinn umgewälzt wird, wie dies durch einen Pfeil angedeutet ist. Die Mulde 6 zur Aufnahme des Bündels 7 wird durch eine bogenförmige Führung 5 erreicht, in die seitliche Führungselemente, z. B. Kettenbolzen hineinragen und hierdurch das Förderelement 4 entlang der Mulde 6 führen.

Während der Umlaufbewegung des Förderelementes 4 im Uhrzeigersinn wird das Bündel 7 umgewälzt und hierbei eine geordnete Lagerung der Einzelstäbe oder -stangen 8 herbeigeführt. Durch diese Ausrichtung der einzelnen Gegenstände 8 können diese in entsprechend ausgeformte Rillen 9 am Förderelement 4 fallen und mittels des hochfördernden Trums des Förderelementes 4 zu der hier rechts oben angeordneten Abgabestelle 10 transportiert werden. Die Abgabestelle 10 kann hierbei durch an sich bekannte Magazinvorrichtungen oder Zwischenspeicher gebildet sein.

Die Rillen 9 sind hier in gleichmäßigem Abstand am Außenumfang des Förderelementes 4 vorgesehen, wobei die Breite und Tiefe der Rillen 9 an den jeweiligen Durchmesser der zu fördernden Gegenstände 8 angepaßt ist. Unter Durchmesser wird hierbei nicht nur der Querschnitt von Rohren oder runden Stangen verstanden, sondern auch der Querschnitt von vieleckigen Stäben, wie beispielsweise Sechskant- oder Achtkantstangen. Durch diese Ausgestaltung der Rillen 9 wird erreicht, daß der jeweilige zu vereinzelnde Gegenstand 8 in den Rillen 9 festgehalten wird, während weitere ggfs. aus dem Bündel 7 mitgenommene Gegenstände nach kurzer Hochförderung wieder in die Mulde 6 zurückfallen. Um sicherzustellen, daß jeweils nur ein Gegenstand zu der Abgabestelle 10 transportiert wird, kann auch ein zusätzlicher Abstreifer 11 vorgesehen sein, der entsprechend der Aufbauhöhe h von nachfolgend beschriebenen Aufbauprofilen 12 über dem Förderelement 4 ausgerichtet ist.

Wie in dem rechten Teil von Fig. 1 als vergrößerte Einzelheit dargestellt ist, sind die Aufbauprofile 12 auf der Außenseite des Förderelementes 4, hier einem Kettentrieb 13 befestigt, beispielsweise aufgeschweißt, aufgenietet, aufgeschraubt, aufgeklebt oder aufgesteckt. Die Aufbauprofile 12 können jedoch auch in Art einer Kette für eine Kettensäge einstückig als Stanzteile zusammen mit den Kettengliedern 15 hergestellt werden. Wie ersichtlich, sind die Aufbauprofile 12 an jeweils einem Kettenglied 15 angeordnet bzw. der Teilungsabstand der Kettenbolzen 15' auf die jeweilige Breite der Aufbauprofile 12 abgestimmt, so daß diese bei der Umlenkung an den Umlenkrädern 3 zusammen mit den Kettengliedern 15 beweglich sind. Die Kettenbolzen 15' sind geringfügig verlängert, so daß sie zur Bildung der Mulde 6 seitlich in die Führung 5 eingreifen. Zur Erleichterung der Abgabe des vereinzelten Gegenstandes 8 an der Abgabestelle 10 können die in Umlaufrichtung nachlaufenden Flanken 16 der hier leistenförmig ausgebildeten Aufbauprofile 12 auch geneigt sein. Ebenso ist es möglich, den Grund 17 der Rillen 9 durch die Formgebung der Aufbauprofile 12 ausgerundet zu gestalten, so daß ein Rohr oder ein Rundstab exakt in die Rille 9 eingepaßt ist.

Die Aufbauprofile 12 sind in der dargestellten Ansicht etwa gleich groß wie die Kettenglieder 15 ausgebildet und weisen in ihrer Mitte je eine Rille 9 auf. Durch die mittige Position der Rillen 9 in den Aufbauprofilen 12 wird erreicht, daß sich diese beim Durchlauf durch die Mulde 6 ineinanderschieben können, jedoch die Rille 9 zur Aufnahme eines Stabes oder Rohres 8 nicht verschränkt bzw. in seiner Breite reduziert wird. Die Aufbauhöhe h der Aufbauprofile 12 entspricht in etwa dem Durchmesser der zu vereinzelnden Gegenstände, nämlich in dem Bereich von 51 - 149 % des Durchmessers des zu vereinzelnden Gegenstandes 8, damit zum Einen gewährleistet ist, daß der vereinzelte Gegenstand beim Herausfördern aus der Mulde 6 nicht aus der Rille zurückrollt und andererseits ein ggfs. anhaftendes zweites Rohr in der bereits gefüllten Rille keinen Halt findet und somit spätestens von dem Abstreifer 11 abgestreift wird. Als zweckmäßige Werte für die Ausgestaltung der Rillen 9 haben sich hinsichtlich der Breite und der Höhe etwa 100 bis 120 % des jeweiligen Durchmessers bzw. der größten Breite des zu vereinzelnden Gegenstandes herausgestellt.

In Fig. 2 ist die entsprechende Draufsicht auf die Vereinzelungsvorrichtung 1 gemäß Fig. 1 dargestellt. Hierbei ist das Bündel 7 der zu vereinzelnden Gegenstände 8 durch eine Vielzahl von schematisch dargestellten Stangen oder Rohren angedeutet. Über dem Bündel 7 erstrecken sich von dem Rahmen 2 ausgehende Streben 21 zur Lagerung des Abstreifers 11. Wie oben angedeutet, ist der Abstreifer 11 für die Funktion der Vereinzelungsvorrichtung 1 nicht absolut nötig und kann auch entfallen. Mittels der Streben 21 ist der Abstreifer 11 zur Anpassung an verschiedene Aufbauhöhen der Aufbauprofile 12 in Anpassung an unterschiedlich dicke zu vereinzelnde Rohre oder Stäbe höhenverstellbar. Zur Beladung des Bündels 7 in die Mulde 6 kann der Abstreifer 11 zusammen mit den Streben 21 über nicht näher dargestellte Schnellverschlüsse auch entfernt oder verschwenkt werden. Das Förderelement 4 ist hier durch zwei strichpunktiert angedeutete Ketten 13 gebildet, die durch leistenförmige Aufbauprofile 12 miteinander verbunden sind, in deren Mitte jeweils eine längliche Rille 9 gebildet ist. Wie oben angedeutet, sind die Rillen 9 in ihrer Breite und Tiefe an die zu vereinzelnden Gegenstände 8 angepaßt. Es können auch zwei oder drei parallel verlaufende Rillen 9, 19, 29, 39 usw. (vgl. Fig. 5) in einem einzigen, dann entsprechend breiteren Aufbauprofil 12 eingearbeitet sein.

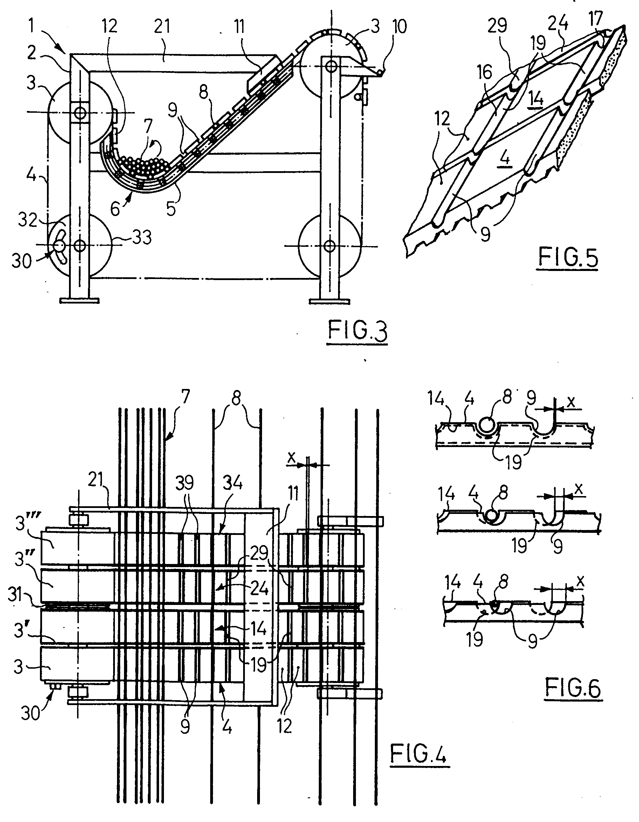

Weiterhin ist nicht erforderlich, daß sich die Rillen 9 über die gesamte Breite b des Förderelements erstrecken. Die Rillen 9 bzw. die Aufbauprofile 12 können auch mehrfach unterbrochen sein, z. B. wenn mehrere kürzere Aufbauprofile 12 in Richtung der Breite b mit Abstand nebeneinander auf mehreren Ketten 13 oder Riemen befestigt sind (vgl. Fig. 4).

Es sei darauf hingewiesen, daß mit dem hier gezeigten einzigen Förderelement 4 in Form von zwei voneinander beabstandeten Ketten 13, die über die Aufbauprofile 12 miteinander verbunden sind, eine sichere Vereinzelung durchgeführt werden kann. Die Breite b des Förderelementes 4 entspricht hierbei etwa einem Drittel der Länge (Maß B) der zu vereinzelnden Gegenstände 8.

Übliche Maße sind beispielsweise 3 m lange Bremsleitungen 8, so daß das Förderelement 4 etwa 1 m breit ist bzw. die Aufbauleisten 12 zur Verbindung der beiden Kettentriebe 13 etwa 1 m lang sind. Bei längeren Stäben oder Rohren, z. B. von 6 m Länge, können auch zwei oder drei der in Fig. 2 dargestellten Vereinzelungseinheiten nebeneinandergestellt werden.

Insbesondere bei der Anwendung auf Bremsleitungen als zu vereinzelnde Gegenstände 8 ist mittels entlang dem hochfördernden Trum des Förderelementes konisch auseinanderlaufender Führungsleisten 20 eine axiale Ausrichtung der Bremsleitungen 8 möglich. Die Bremsleitungen weisen hierbei an ihren Enden Umbördelungen 18 auf, sowie Überwurfmuttern 18', so daß beim Hochfördern des Förderelementes 4 die Überwurfmuttern 18' nach dem Kontakt mit den Führungsleisten 20 nach außen bis zum Anschlag an die Umbördelungen 18 gedrängt werden. Hierbei wird zugleich eine axiale Ausrichtung der Bremsleitungen erreicht, so daß diese an der Abgabestelle 10 jeweils in gleicher Position zu liegen kommen. Die Führungsleisten 20 sind dabei knapp über der Förderebene der Rohre 8 angeordnet oder weisen dort einen Längsschlitz 25 (vgl. Fig. 1) auf, durch den die Bremsleitungen, jedoch nicht deren Überwurfmuttern 18' hindurchgeführt werden und hierdurch die Überwurfmuttern 18' nach außen geschoben werden. Der Antrieb des in Fig. 1 und 2 dargestellten Förderelementes 4 erfolgt bevorzugt über ein von außen her in die Rillen 9 bzw. Aufbauelemente 12 eingreifendes Antriebsrad 26 (hier strichliert angedeutet), dessen Zahnteilung der Teilung der Rillen 9 entspricht und somit ein formschlüssiger Antrieb erreicht wird.

In Fig. 3 ist eine zweite, prinzipiell gleich wie in Fig. 1 aufgebaute Ausführungsform der Vereinzelungsvorrichtung 1 dargestellt. Die wesentlichen Bezugszeichen entsprechen denen aus den Figuren 1 und 2. Die zu vereinzelnden Stäbe, Stangen oder Rohre werden hier in nebeneinander liegenden Rillen 9, 19, 29, 39 während der Umwälzbewegung des Bündels 7 eingefangen und nach oben transportiert. Die Aufbauprofile 12 sind in dieser Ausführung in Art eines Zahnriemens einstückig mit diesem verbunden, so daß die hier insgesamt vier Förderelemente 4, 14, 24, 34 besonders einfach aufgebaut ist. Es sei darauf hingewiesen, daß auch in der Ausführung anstatt der aufgesetzten Aufbauprofile 12 die Rillen 9, 19, 29, 39 in die Kettenglieder 15 einer entsprechend stärker dimensionierten Kette 13 direkt eingearbeitet, z. B. eingefräst sein können.

Die Breite der Aufbauprofile 12 kann beliebig gewählt werden, gegenüber der hier gezeigten Ausbildung können beispielsweise diese auch schmäler gewählt werden, so daß die Rillen 9, 19, 29, 39 enger aufeinander folgen und somit die Aufbauprofile 12 nur noch eine zahnartige Gestaltung besitzen. Es können jedoch auch beispielsweise zwei der hier in Fig. 4 in Draufsicht dargestellten in Umlaufrichtung aufeinander folgenden Aufbauprofile 12 miteinander verbunden werden, so daß sich zwischen den Rillen 9 größere Abstände ergeben und somit bei gleicher Umlaufgeschwindigkeit weniger Gegenstände 8 nach oben transportiert werden. Hierdurch kann neben der Veränderung der Umlaufgeschwindigkeit des Förderelementes 4, hier des Riemens eine einfache Anpassung an die gewünschte Vereinzelungsrate, beispielsweise zur Anpassung an bestimmte Taktzeiten bei der Montage oder Weiterbearbeitung erreicht werden.

Der Antrieb des Förderelementes 4 kann hierbei direkt auf ein Umlenkrad 3 erfolgen; es kann ein Antriebsmotor an einem der beiden oberen Umlenkräder 3 angeflanscht sein. Hierdurch bewegen sich der oder die Riemen synchron im Uhrzeigersinn, so daß das Bündel 7 entgegen dem Uhrzeigersinn umgewälzt wird und hierbei geordnet und entwirrt wird. Bevorzugt ist jedoch ein Antriebsrad 26 vorgesehen, daß in die als Zähne ausgebildeten Aufbauprofile 12 formschlüssig eingreift.

Wie bereits angedeutet, ist mit der Ausführung des Förderelementes 4 als Zahnriemen eine schonende Vereinzelung möglich, so daß Korrosionsschutzschichtungen auf den Bremsleitungen, aber auch Hydraulikleitungen oder Kraftstoffleitungen nicht beschädigt werden. Dies gilt auch für die erste Ausführungsform mit Ketten, wobei die Aufbauprofile 12 mit den darin eingearbeiteten Rillen 9 bevorzugt als Kunststoffprofile hergestellt sind. Anstatt auf Ketten oder Riemen können die Aufbauprofile mit eingearbeiteten Rillen 9 auch auf Seilen befestigt werden.

In Fig. 4 ist die Draufsicht auf die hier vier Umlenkräder 3, 3', 3'' und 3''' gezeigt. Die Rillen 9, 19, 29, 39 sind hier in gleichmäßigem Abstand am Außenumfang des jeweiligen Förderelementes 4, 14, 24, 34 vorgesehen, wobei die Breite und Tiefe der Rillen 9, 19, 29, 39 an den jeweiligen maximalen Durchmesser der zu fördernden Gegenstände 8 angepaßt ist. Durch diese Ausgestaltung der Rillen 9, 19, 29, 39 wird erreicht, daß der jeweilige zu vereinzelnde Gegenstand 8 in den Rillen 9, 19, 29, 39 festgehalten wird, während weitere ggfs. aus dem Bündel 7 mitgenommene Gegenstände nach kurzer Hochförderung wieder in die Mulde 6 zurückfallen.

Die Förderelemente 4, 14 usw. sind hier durch in Fig. 5 vergrößert als Ausschnitt dargestellte Zahnriemen gebildet, die um die zugeordneten Umlenkräder 3, 3', 3'', 3''' umlaufen und leistenförmige Aufbauprofile 12 tragen, in deren Mitte jeweils eine längliche Rille 9, 19, 29, 39 gebildet ist. Wie oben angedeutet, sind die Rillen 9, 19 usw. in ihrer wirksamen Breite oder Überdeckung verstellbar, wie dies in Fig. 6 dargestellt ist. Hierzu wird eines der Förderelemente, hier beispielsweise der vordere, dem Betrachter zugewandte Zahnriemen 4 um ein Maß x gegenüber dem anderen, hintenliegenden und deshalb teilweise verdeckten Förderelement 14 in Umlaufrichtung verschoben, so daß die Rillen 9 und 19, in Seitenansicht gesehen, gegenüber der Position in Fig. 5 mit exakter Gleichausrichtung nicht mehr übereinstimmen, sondern die Rille 9 gegenüber der Rille 19 um das Maß x vorauseilt. Hierdurch sind gegenüber dem ersten Teilbild von Fig. 6, in dem das Überdeckungsmaß x praktisch Null ist, nur noch Gegenstände 8 mit geringerem Durchmesser aufzunehmen und zur Abgabestelle 10 hochzufördern. Wie in dem unteren Teilbild von Fig. 6 dargestellt ist, läßt sich der Versatz um das Maß x bis nahe an die Rillenbreite erhöhen, so daß sich nur noch sehr dünne Gegenstände, z. B. Drähte in der gemeinsamen Ausrichtung der Rillen 9 und 19 befinden. Um hierbei eine Schrägstellung der zu vereinzelnden Gegenstände 8 auszuschließen, sind jedoch nebeneinander wenigstens drei Förderelemente 4, 14, 24 vorgesehen, wobei das mittlere Förderelement gegenüber den beiden äußeren Förderelementen vor- bzw. nacheilt. Durch diese Überdeckung um das Maß x ergibt sich in der Projektion gemäß der Seitenansicht in Fig. 6 eine reduzierte, wirksame Breite (und teilweise auch Tiefe) der Rillen 9, 19... Die gewählte Breite der Rillen 9, 19 entspricht dabei dem maximalen, zu verarbeitenden und zu vereinzelnden Durchmesser, z. B. von 15 mm, wobei durch Verschiebung eines der Förderelemente bis zu der Position im unteren Teilbild von Fig. 6 Drähte von z. B. 2 mm Durchmesser noch sicher vereinzelt werden können.

Zur Verstellung des einen Förderelementes in die vor- bzw. nacheilende Position gegenüber dem anderen Förderelement ist in Fig. 3 schematisch eine Verstellvorrichtung 30, hier eine Langlochverbindung 34 an einem der Umlenkräder 3 vorgesehen, wobei dieses dem Förderelement 4 zugeordnete Umlenkrad 3 gegenüber dem deckungsgleich dahinterliegenden Umlenkrad 3' für das Förderelement 14 (vgl. auch Fig. 4) um einen geringen Verschwenkwinkel verdreht werden kann, so daß sich gegenüber der deckungsgleichen Position (Fig. 6 oben) die Stellung der beiden unteren Teilbilder in Fig. 6 ergibt. Hierbei wird z. B. eine Schraube an der Langlochverbindung 30 gelöst, dann der Außenmantel 33 des Umlenkrades 3 gegenüber seiner Stirnwand 32 verdreht und wieder arretiert.

Anstatt der stufenlosen Verstellung mittels dieser Langlochverbindung 30 kann auch eine Verstellung der Vor- bzw. Nacheilung zwischen den Rillen 19 und 29 an den Förderelementen 14 bzw. 24 durch eine Planverzahnung 31 (z. B. Hirth-Verzahnung) zwischen den beiden auf gleicher Welle gelagerten Umlenkrädern 3' und 3'' (vgl. Fig. 4) erreicht werden. Diese Planverzahnung 31 kann beispielsweise durch geringes Verschieben des Umlenkrades 3' auf seiner Welle, anschließendes Verdrehen um einen oder mehrere Zähne der Planverzahnung und Wiedereinrasten gegenüber dem anderen, achsgleichen Umlenkrad 3 und 3'' erreicht werden. Es sind auch andere Möglichkeiten der Phasenverschiebung des einen Förderelementes bezüglich des anderen Förderelementes möglich, indem beispielsweise der verzahnte Außenmantel 33 des Umlenkrades 3 verdrehbar ist, so daß sich jeweils eine paarweise Voreilung bzw. Nacheilung (Förderelement 4 und 24 gegenüber 14 und 34) um das Maß x in Fig. 6 ergibt.

## Patentansprüche

1. Vorrichtung zum Vereinzeln von stangenförmigen Gegenständen, insbesondere von Bremsleitungen, mit wenigstens einem endlosen Förderelement (4, 14, 24, 34...), insbesondere Riemen- oder Kettentrieb, das in einer U-förmigen, zum Beladen nach oben offenen Mulde (6) ein Bündel (7) der zu vereinzelnden stangenförmigen Gegenstände (8) aufnimmt, wobei das Bündel (7) zur parallelen Ausrichtung und deren Vorbereitung für die Vereinzelung umgewälzt wird,
dadurch gekennzeichnet, daß
an dem Förderelement (4, 14, 24, 34...) Rillen (9, 19, 29, 39...) ausgebildet sind, deren Breite und Tiefe dem jeweiligen Durchmesser der zu vereinzelnden Gegenstände (8) entspricht und das Förderelement (4, 14, 24, 34...) zur Bildung der Mulde (6) an einer bogenförmigen Führung (5) zwangsgeführt ist.

2. Vorrichtung nach Anspruch 1, dadurch gekennzeichnet, daß das Förderelement (4, 14, 24, 34...) als Zahnriemen ausgebildet ist, wobei die Rillen (9, 19, 29, 39...) jeweils zwischen zwei einstückig mit dem Zahnriemen ausgebildeten, plateauförmigen Aufbauprofilen (12) angeordnet sind.

3. Vorrichtung nach Anspruch 1, dadurch gekennzeichnet, daß das Förderelement (4, 14, 24, 34...) als Kette (13) ausgebildet ist, wobei die Rillen (9, 19, 29, 39...) jeweils in an der Kette (13) befestigten Aufbauprofilen (12) gebildet sind.

4. Vorrichtung nach Anspruch 3, dadurch gekennzeichnet, daß die Aufbauprofile (12) einstückig an den Kettengliedern (15) der Kette (13) ausgebildet sind.

5. Vorrichtung nach einem der Ansprüche 1 bis 4, dadurch gekennzeichnet, daß an den Rillen (9, 19, 29, 39...) in Umlaufrichtung des Förderelementes (4, 14, 24, 34...) geneigte Flanken (16) vorgesehen sind.

6. Vorrichtung nach einem der Ansprüche 1 bis 5, dadurch gekennzeichnet, daß die Rillen (9, 19, 29, 39...) an ihrem Grund (17) U-förmig ausgerundet sind.

7. Vorrichtung nach einem der Ansprüche 1 bis 6, dadurch gekennzeichnet, daß am hochfördernden Trum des Förderelementes (4, 14, 24, 34...) entlang ein rahmenfester Abstreifer (11) vorgesehen ist, der unmittelbar über die Rillen (9, 19, 29, 39...) verlaufend ausgerichtet ist.

8. Vorrichtung nach einem der Ansprüche 1 bis 7, dadurch gekennzeichnet, daß das Förderelement (4, 14, 24, 34...) von einem an den Rillen (9, 19, 29, 39...) und/oder Aufbauprofilen (12) angreifenden Antriebsrad (26) angetrieben ist.

9. Vorrichtung nach einem der Ansprüche 1 bis 8, dadurch gekennzeichnet, daß zur Vereinzelung von Bremsleitungen, die an ihren Enden Bördelungen (18) und Überwurfmuttern (18') aufweisen, konisch verlaufende Führungsleisten (20) vorgesehen sind, die von der Breite (b) des Förderelementes (4, 14, 24, 34...) auf die Abmessungen (B) der Bremsleitungen auseinanderlaufen und die Überwurfmuttern (18') in ihre Außenposition über die Bördelungen (18) verschoben werden.

10. Vorrichtung nach einem der Ansprüche 1 bis 9,
dadurch gekennzeichnet, daß
mehrere Förderelemente (4, 14, 24, 34) parallel nebeneinander angeordnet sind und relativ zueinander in Umlaufrichtung der Förderelemente (4, 14, 24, 34) unter Veränderung der gegenseitigen Überdeckung (x) der Rillen (9, 19, 29, 39) verstellbar sind.

11. Vorrichtung nach Anspruch 10, dadurch gekennzeichnet, daß zwischen jeweils zwei achsgleich angeordneten Umlenkrädern (3, 3', 3'', 3''') der Förderelemente (4, 14, 24, 34) eine Verstellvorrichtung (30, 31) zur Verstellung der gegenseitigen Winkellage vorgesehen ist.
